# EUROPEAN PATENT APPLICATION

(11) **EP 4 679 454 A1**
(43) Date of publication of application: **14.01.2026**
(21) Application number: 24785016.7
(22) Date of filing: 19.01.2024
(51) Int. Cl.: G21C 17/08, G01T 1/22

(54) **METHOD AND APPARATUS FOR DIAGNOSING OPEN POOL-TYPE NUCLEAR FUEL COOLING SYSTEM BY USING CHERENKOV IMAGE**

(30) Priority: 05.04.2023 KR 20230045033
(71) Applicant: Korea Atomic Energy Research Institute, Daejeon 34057 (KR)
(72) Inventor: KIM, Hyeon Il, Daejeon 34057 (KR); YU, Yong Gyun, Daejeon 34057 (KR); KIM, Min Jong, Daejeon 34057 (KR); KO, Tae Young, Daejeon 34057 (KR)
(74) Representative: BCKIP Part mbB
(86) International application number: PCT/KR2024/000969
(87) International publication number: WO 2024/210305

(57) **Abstract**

A method and apparatus for diagnosing an open-pool type nuclear fuel cooling system using Cherenkov imaging are provided. The method for diagnosing an open-pool type nuclear fuel cooling system generates image data from a captured image of the system, generates simulation data from operational data of the system, and diagnoses the state of the system from the image data and the simulation data using a pre-trained neural network model.

## Description

### TECHNICAL FIELD

The present invention relates to a method and apparatus for diagnosing an open-pool type nuclear fuel cooling system using Cherenkov imaging.

### BACKGROUND

The protection system of a reactor such as HANARO is designed with requirements such as multiplicity, diversity, and independence to maximize reliability. The control system also applies design requirements such as multiplicity and independence in the implementation of some important functions to maximize the reliability of power control. Accordingly, various reactor power measurement devices enable the safe protection and power control of the reactor.

The power of the HANARO reactor is currently measured by thermal power, neutron power, gamma power, and the like. The response speed for thermal power is very slow, whereas the response speed for neutron power and gamma power is very fast. In the case of neutron power or gamma power measuring instruments, the instrument itself can detect instantaneous power changes, but very short changes may not be recorded during the processing of measurement signals or output signals.

Furthermore, there is a need to secure a system that can measure abnormalities in flow tubes, nuclear fuel, etc., inside the reactor core, or a system that can detect changes within spent nuclear fuel.

Meanwhile, machine learning through neural networks has recently been applied and researched in various fields due to its advantages in improving the diversity and accuracy of pattern recognition through big data. Accordingly, various technologies for monitoring open-pool type nuclear fuel cooling systems using neural networks are being researched in the reactor-related field as well.

### SUMMARY

The present invention is directed to provide a method and apparatus for diagnosing an open-pool type nuclear fuel cooling system that can diagnose the state of the system using Cherenkov imaging.

A method for diagnosing an open-pool type nuclear fuel cooling system according to an embodiment of the present invention comprises: collecting a captured image of the open-pool type nuclear fuel cooling system and operational data of the open-pool type nuclear fuel cooling system; generating image data from the captured image; generating simulation data from the operational data; and diagnosing a state of the open-pool type nuclear fuel cooling system from the image data and the simulation data using a pre-trained diagnostic model.

The generating the image data may include: converting a brightness and color difference of the Cherenkov radiation included in the captured image into a histogram of one of RGB, HSV (hue saturation value), and YUV; and converting the converted histogram into a digital signal to generate the image data.

The generating the simulation data may include generating the simulation data on an intensity and a distribution of Cherenkov radiation by performing a nuclear reaction simulation of the open-pool type nuclear fuel cooling system based on the operational data.

Here, the diagnostic unit may include a first extraction unit, a second extraction unit, and a determination unit, wherein the first extraction unit may be trained to output a first feature vector for the image data upon receiving the image data as input, the second extraction unit may be trained to output a second feature vector for the simulation data upon receiving the simulation data as input, and the determination unit may be trained to output a diagnosis result for the state of the open-pool type nuclear fuel cooling system upon receiving the first feature vector generated from the first extraction unit, the second feature vector generated from the second extraction unit, and a true diagnosis result as label data.

Furthermore, the determination unit may generate a determination loss by comparing the true diagnosis result with the actually outputted diagnosis result, the first extraction unit may be further trained to output the first feature vector from the image data upon receiving the determination loss, and the second extraction unit may be further trained to output the second feature vector from the simulation data upon receiving the determination loss.

The diagnosing the state of the open-pool type nuclear fuel cooling system may include: extracting a feature vector of the image data and a feature vector of the simulation data, respectively, using the trained diagnostic model; and diagnosing the state based on a separation distance between the feature vector of the image data and the feature vector of the simulation data.

Furthermore, the diagnosing the state of the open-pool type nuclear fuel cooling system may include: diagnosing the state of the open-pool type nuclear fuel cooling system as a normal state if the separation distance is less than a predetermined threshold value, and diagnosing the state of the open-pool type nuclear fuel cooling system as an abnormal state if the separation distance is equal to or greater than the threshold value.

Furthermore, the diagnosing the state of the open-pool type nuclear fuel cooling system may include: diagnosing a type of abnormal state of the open-pool type nuclear fuel cooling system, an area presumed to be in an abnormal state, and a degree of the abnormal state.

An apparatus for diagnosing an open-pool type nuclear fuel cooling system according to an embodiment of the present invention comprises: a memory in which a state diagnosis program is stored; and a processor that executes the state diagnosis program to collect a captured image of an open-pool type nuclear fuel cooling system and operational data of the open-pool type nuclear fuel cooling system, generate image data from the captured image, generate simulation data from the operational data, and diagnose a state of the open-pool type nuclear fuel cooling system from the image data and the simulation data using a pre-trained diagnostic model.

The processor may convert a brightness and a color difference of Cherenkov radiation included in the captured image into a histogram of one of RGB, HSV (hue, saturation, value), and YUV, and converts the converted histogram into a digital signal to generate the image data.

Furthermore, the processor may perform a nuclear reaction simulation of the open-pool type nuclear fuel cooling system based on the operational data to generate the simulation data on an intensity and a distribution of Cherenkov radiation.

Here, the diagnostic model may include a first extraction unit, a second extraction unit, and a determination unit, the first extraction unit may be trained to output a first feature vector for the image data upon receiving the image data, the second extraction unit may be trained to output a second feature vector for the simulation data upon receiving the simulation data, and the determination unit may be trained to output a diagnosis result for the state of the open-pool type nuclear fuel cooling system upon receiving the first feature vector generated from the first extraction unit, the second feature vector generated from the second extraction unit, and a true diagnosis result as label data.

Furthermore, the determination unit may generate a determination loss by comparing the true diagnosis result with an actual diagnosis result output, the first extraction unit may be further trained to output the first feature vector from the image data upon receiving the determination loss, and the second extraction unit may be further trained to output the second feature vector from the simulation data upon receiving the determination loss.

The processor may extract a feature vector of the image data and a feature vector of the simulation data, respectively, using the trained diagnostic model, and diagnoses the state based on a separation distance between the feature vector of the image data and the feature vector of the simulation data.

Here, the processor may diagnose the state of the open-pool type nuclear fuel cooling system as a normal state if the separation distance is less than a predetermined threshold value, and diagnose the state of the open-pool type nuclear fuel cooling system as an abnormal state if the separation distance is equal to or greater than the threshold value.

The present invention can quickly and accurately diagnose the state of an open-pool type nuclear fuel cooling system by providing both image data generated from images acquired from the system and simulation data, obtained through a nuclear reaction simulation of the system's operational data to a neural network model for diagnosing the state.

### BRIEF DESCRIPTION OF THE DRAWINGS

FIG. 1 is a diagram illustrating an apparatus for diagnosing an open-pool type nuclear fuel cooling system according to an embodiment of the present invention.
FIG. 2 is a diagram conceptually illustrating the functions of the state diagnosis program of FIG. 1.
FIG. 3 is a diagram illustrating the diagnostic unit of FIG. 2.
FIGS. 4 to 6 are diagrams illustrating embodiments of a method for training the diagnostic unit of FIG. 3.
FIG. 7 is a flowchart illustrating a method for diagnosing an open-pool type nuclear fuel cooling system according to an embodiment of the present invention.

### DETAILED DESCRIPTION

The advantages and features of the present invention, and methods for achieving them, will become clear by referring to the embodiments described in detail below with reference to the accompanying drawings. However, the present invention is not limited to the embodiments disclosed below, but may be embodied in many different forms; these embodiments are provided so that this disclosure will be thorough and complete, and will fully convey the scope of the invention to those skilled in the art. The present invention is only defined by the scope of the claims.

In describing the embodiments of the present invention, detailed descriptions of known functions or configurations will be omitted if it is determined that they may unnecessarily obscure the gist of the present invention. Also, the terms described below are defined in consideration of their functions in the embodiments of the present invention and may vary according to the intention or custom of a user or operator. Therefore, their definitions should be made based on the content throughout this specification.

Hereinafter, preferred embodiments of the present invention will be described in detail with reference to the accompanying drawings.

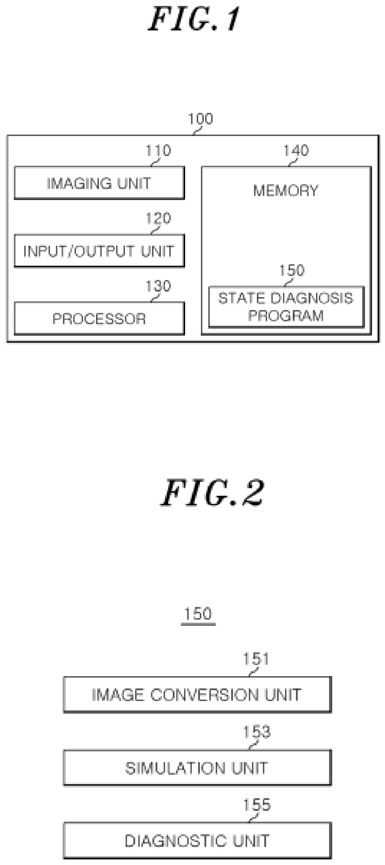

FIG. 1 is a diagram illustrating an apparatus for diagnosing an open-pool type nuclear fuel cooling system according to an embodiment of the present invention.

Referring to FIG. 1, the apparatus 100 for diagnosing an open-pool type nuclear fuel cooling system of this embodiment may include an imaging unit 110, an input/output unit 120, a processor 130, and a memory 140.

One or more imaging units 110 are installed adjacent to the open-pool type nuclear fuel cooling system (not shown) and can capture images of the operating system to output a captured image.

The open-pool type nuclear fuel cooling system may refer to an open pool that includes nuclear fuel and has a function of cooling the nuclear fuel. For example, the open-pool type nuclear fuel cooling system may include one of a reactor and a spent nuclear fuel storage facility.

Here, the reactor has a structure that generates nuclear fission through a plurality of nuclear fuel rod bundles and may be composed of various structures such as a moderator, control rods, and coolant that control the reactor.

Such a reactor may be a top-open type reactor like the HANARO reactor, in which case one or more imaging units 110 of this embodiment may be installed adjacent to the top of the open-type reactor. Furthermore, according to an embodiment, the reactor may be a closed type, in which case one or more imaging units 110 may be installed inside the reactor.

Furthermore, when a plurality of imaging units 110 are installed, information such as a unique ID, location, function, pixel count, and imaging conditions may be set and stored in each imaging unit 110.

The input/output unit 120 may receive operational data corresponding to the operation of the open-pool type nuclear fuel cooling system from an external source, for example, a control system (not shown) of the open-pool type nuclear fuel cooling system.

Here, the operational data may include at least one of fuel rod arrangement information in the reactor, total power output information of the reactor, power change information up to maximum output according to reactor operation, spent nuclear fuel arrangement information, and cooling system output information.

Furthermore, the input/output unit 120 may be provided with a diagnosis result of the state of the open-pool type nuclear fuel cooling system from the processor 130, which will be described later, and may output it to an external source, that is, the control system of the open-pool type nuclear fuel cooling system. Accordingly, the control system of the open-pool type nuclear fuel cooling system may perform operational control of the system to protect it based on the diagnosis result provided through the input/output unit 120.

The processor 130 may diagnose the state of the operating open-pool type nuclear fuel cooling system based on the captured image provided from the imaging unit 110 and the operational data provided through the input/output unit 120, and output a diagnosis result accordingly.

Here, the processor 130 may diagnose the type of abnormal state of the open-pool type nuclear fuel cooling system, the area where an abnormal state is presumed, and information about the abnormal state based on the captured image and operational data, and output a diagnosis result accordingly.

The memory 140 may store a state diagnosis program 150 and information necessary for its execution. The state diagnosis program 150 may be software including instructions for diagnosing the state of the open-pool type nuclear fuel cooling system from the captured image and operational data.

Accordingly, the processor 130 may execute the state diagnosis program 150 stored in the memory 140 and use it to diagnose the state of the open-pool type nuclear fuel cooling system from the captured image and operational data, and output a diagnosis result accordingly.

In one embodiment, diagnosing the state of the open-pool type nuclear fuel cooling system may mean diagnosing an abnormal state or an emergency state related to flow tubes, nuclear fuel, etc., inside the reactor core.

In another embodiment, diagnosing the state of the open-pool type nuclear fuel cooling system may mean diagnosing an abnormal state or an emergency state related to changes within spent nuclear fuel, etc.

Here, the abnormal state may refer to an off-normal state that does not require the reactor to be shut down. Furthermore, the emergency state may refer to an off-normal state at a level that requires the reactor to be shut down.

The abnormalities predictable through the method or apparatus of the present invention may include any off-normal state that is quantifiable from the water level, as a type of off-normal state. For example, the off-normal state may include local damage to nuclear fuel, reflector abnormality, reactor pool water level abnormality, control and shutdown rod abnormality, and nuclear fuel cooling channel flow rate distribution abnormality.

FIG. 2 is a diagram conceptually illustrating the functions of the state diagnosis program of FIG. 1.

Referring to FIG. 2, the state diagnosis program 150 of this embodiment may include an image conversion unit 151, a simulation unit 153, and a diagnostic unit 155.

The image conversion unit 151, the simulation unit 153, and the diagnostic unit 155 shown in FIG. 2 are conceptually divided to easily explain the functions of the state diagnosis program 150, and the present invention is not limited thereto.

For example, according to an embodiment of the present invention, the functions of the image conversion unit 151, the simulation unit 153, and the diagnostic unit 155 may be merged or separated, and may be implemented as a series of instructions included in a single program.

The image conversion unit 151 receives a captured image of the inside of the open-pool type nuclear fuel cooling system from the imaging unit 110, and may convert the brightness and color difference of the Cherenkov radiation included in the received captured image into various color models.

For example, the image conversion unit 151 may convert the captured image into a histogram of one of RGB (red, green, blue), YUV, and HSV (hue, saturation, value).

Furthermore, the image conversion unit 151 may generate image data corresponding to the Cherenkov radiation of the captured image by converting the converted model, for example, the histogram, into a digital signal.

Here, the image data may include at least one of an average value, standard deviation, variance, maximum value, minimum value, and time-based average value of a specific range of the histogram.

The simulation unit 153 may simulate a nuclear reaction within the open-pool type nuclear fuel cooling system based on the operational data provided from the input/output unit 120, and generate simulation data accordingly.

Here, the simulation data may include data on the flux (intensity) and distribution of Cherenkov radiation calculated from a simulation of the nuclear reaction within the open-pool type nuclear fuel cooling system.

The diagnostic unit 155 is provided with image data from the image conversion unit 151 and simulation data from the simulation unit 153, and may diagnose and output the state of the open-pool type nuclear fuel cooling system from them.

For example, the diagnostic unit 155 may extract a feature vector from each of the image data and the simulation data. Then, the diagnostic unit 155 may compare the feature vector of each data, and accordingly diagnose the state of the open-pool type nuclear fuel cooling system and output a diagnosis result.

This diagnostic unit 155 may include one or more neural network models pre-trained with training data.

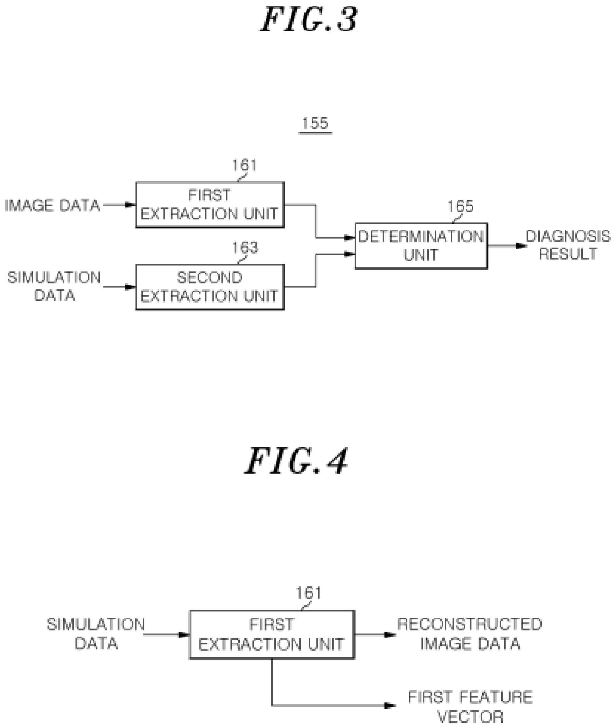

FIG. 3 is a diagram illustrating the diagnostic unit of FIG. 2, and FIGS. 4 to 6 are diagrams illustrating embodiments of a method for training the diagnostic unit of FIG. 3.

First, referring to FIG. 3, the diagnostic unit 155 of this embodiment may include a first extraction unit 161, a second extraction unit 163, and a determination unit 165.

Referring to FIGS. 3 and 4, the first extraction unit 161 of the diagnostic unit 155 may be trained to extract one or more feature vectors, for example, a first feature vector, for the image data upon receiving the image data from the image conversion unit 151.

This first extraction unit 161 may be an autoencoder that extracts one or more first feature vectors from the training data, i.e., the image data, and generates and outputs reconstructed training data, i.e., reconstructed image data, by combining and reconstructing the extracted first feature vectors.

The first extraction unit 161 may repeatedly perform the training of extracting and outputting the first feature vector from the aforementioned image data while adjusting internal parameters so that the inputted image data and the outputted reconstructed image data become identical.

Furthermore, according to an embodiment of the present invention, the first extraction unit 161 may further receive a determination loss provided from the determination unit 165, which will be described later, and repeatedly perform training to minimize this determination loss, that is, training to extract the first feature vector from the image data.

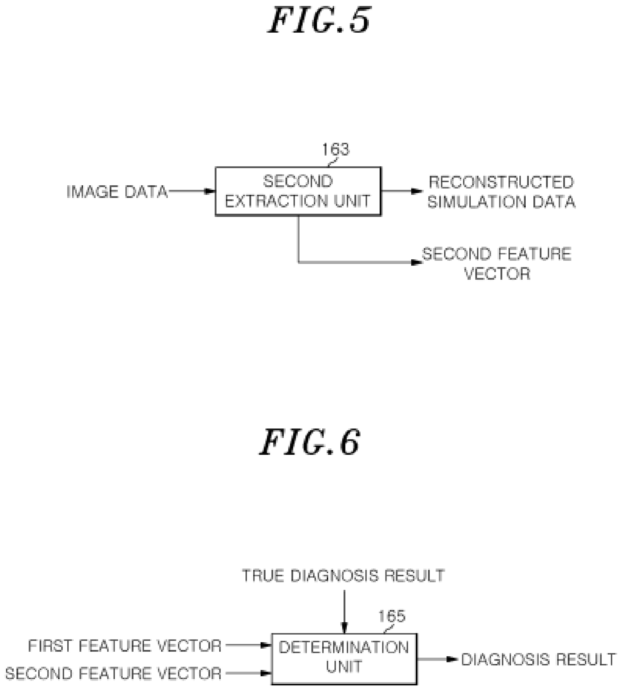

Referring to FIGS. 3 and 5, the second extraction unit 163 of the diagnostic unit 155 may be trained to extract one or more feature vectors, for example, a second feature vector, for the simulation data upon receiving the simulation data from the simulation unit 153.

This second extraction unit 163 may be an autoencoder that extracts one or more second feature vectors from the training data, i.e., the simulation data, and generates and outputs reconstructed training data, i.e., reconstructed simulation data, by combining and reconstructing the extracted second feature vectors.

The second extraction unit 163 may repeatedly perform the training of extracting and outputting the second feature vector from the aforementioned simulation data while adjusting internal parameters so that the inputted simulation data and the outputted reconstructed simulation data become identical.

Furthermore, according to an embodiment of the present invention, the second extraction unit 163 may further receive a determination loss provided from the determination unit 165, which will be described later, and repeatedly perform training to minimize this determination loss, that is, training to extract the second feature vector from the simulation data.

Referring to FIGS. 3 and 6, the determination unit 165 of the diagnostic unit 155 may be trained to output a diagnosis result for the state of the open-pool type nuclear fuel cooling system according to the difference between the first feature vector and the second feature vector, upon receiving the first feature vector from the first extraction unit 161 and the second feature vector from the second extraction unit 163.

For example, the determination unit 165 may calculate a separation distance based on the similarity between the first feature vector and the second feature vector. At this time, the separation distance may become shorter as the first feature vector and the second feature vector are more similar.

Then, the determination unit 165 may diagnose the state based on the separation distance according to a predetermined threshold value. Here, if the separation distance is less than the threshold value, the determination unit 165 may diagnose the state as a normal state. Furthermore, if the separation distance is equal to or greater than the threshold value, the determination unit 165 may diagnose the state as an abnormal state.

Meanwhile, as described above, the image data provided to the diagnostic unit 155 is data on Cherenkov radiation from a captured image taken during the operation of the open-pool type nuclear fuel cooling system, and the simulation data may be data on Cherenkov radiation according to a nuclear reaction simulation.

Therefore, the diagnostic unit 155 may calculate the distance from the second feature vector extracted from the simulation data to the first feature vector extracted from the image data, and diagnose the state by comparing the calculated distance with a threshold value.

Furthermore, the determination unit 165 of this embodiment can receive the true diagnosis result for the state, for example, the actual diagnosis result, as label data along with the first and second feature vectors. Accordingly, the determination unit 165 may compare the label data with the actually outputted diagnosis result and determine a determination loss value according to the comparison result.

Accordingly, the determination unit 165 provides the determined determination loss value to the first extraction unit 161, the second extraction unit 163, and the determination unit 165 itself, thereby allowing each of them to repeatedly perform training to minimize the determination loss, that is, training to extract the first feature vector from the image data, training to extract the second feature vector from the simulation data, and training to diagnose the state from the first feature vector and the second feature vector.

As described above, the apparatus 100 for diagnosing an open-pool type nuclear fuel cooling system of this embodiment provides both image data acquired from an operating open-pool type nuclear fuel cooling system and simulation data acquired through a nuclear reaction simulation based on operational data to a pre-trained neural network model, thereby enabling the neural network model to quickly and accurately diagnose the state of the open-pool type nuclear fuel cooling system.

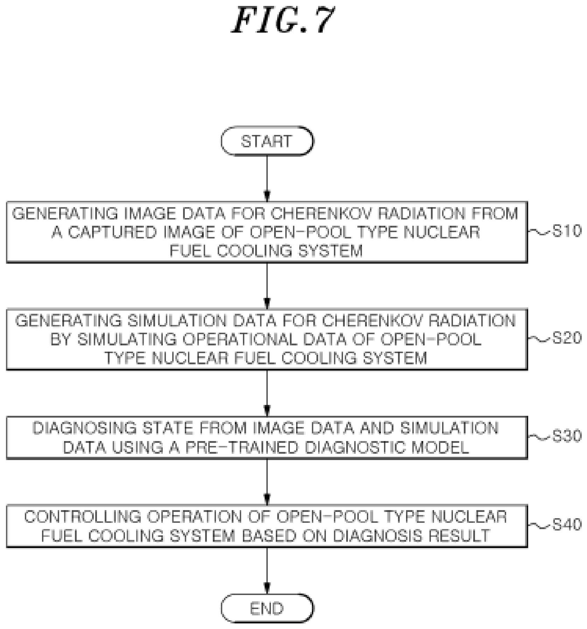

FIG. 7 is a flowchart illustrating a method for diagnosing an open-pool type nuclear fuel cooling system according to an embodiment of the present invention.

Referring to FIG. 7, the apparatus 100 for diagnosing an open-pool type nuclear fuel cooling system may acquire a captured image by capturing an image of the inside of the operating system through the imaging unit 110.

Furthermore, the apparatus 100 for diagnosing an open-pool type nuclear fuel cooling system may receive operational data of the system from an external source, that is, the control system of the open-pool type nuclear fuel cooling system, through the input/output unit 120.

The processor 130 of the apparatus 100 for diagnosing an open-pool type nuclear fuel cooling system may execute the state diagnosis program 150 stored in the memory 140.

Accordingly, the image conversion unit 151 may convert the brightness and color difference of the Cherenkov radiation included in the captured image provided from the imaging unit 110 into a histogram of one of RGB, YUV, and HSV, and generate image data by converting the converted histogram into a digital signal (S10).

Here, the image data may include at least one of an average value, standard deviation, variance, maximum value, minimum value, and time-based average value of a specific range of the histogram.

Next, the simulation unit 153 may simulate the nuclear reaction of the open-pool type nuclear fuel cooling system based on the operational data provided from the input/output unit 120, and generate simulation data according to the result (S20).

Here, the simulation data may include data on the flux and distribution of Cherenkov radiation.

Next, the diagnostic unit 155 may diagnose the state of the open-pool type nuclear fuel cooling system from the image data and simulation data using a pre-trained neural network model, for example, the first extraction unit 161, the second extraction unit 163, and the determination unit 165 (S30).

For example, the first extraction unit 161 of the diagnostic unit 155 may extract one or more first feature vectors from the image data, and the second extraction unit 163 may extract one or more second feature vectors from the simulation data.

Then, the determination unit 165 may diagnose the state of the open-pool type nuclear fuel cooling system as normal or abnormal based on the separation distance between the first feature vector and the second feature vector, and output a diagnosis result accordingly.

For example, the determination unit 165 may compare the separation distance with a predetermined threshold value, and if the separation distance is less than the threshold value, it may diagnose the state of the open-pool type nuclear fuel cooling system as a normal state. Furthermore, the determination unit 165 may compare the separation distance with the predetermined threshold value, and if the separation distance is equal to or greater than the threshold value, it may diagnose the state of the open-pool type nuclear fuel cooling system as an abnormal state.

Next, the apparatus 100 for diagnosing an open-pool type nuclear fuel cooling system may output the diagnosis result for the state of the system, which was outputted from the diagnostic unit 155, to the control system of the open-pool type nuclear fuel cooling system through the input/output unit 120. Accordingly, the control system of the open-pool type nuclear fuel cooling system can protect the system by controlling its operation based on the received diagnosis result (S40).

The combinations of each block of the block diagrams and each step of the flowcharts described above may be performed by computer program instructions. These computer program instructions can be loaded onto an encoding processor of a general-purpose computer, a special-purpose computer, or other programmable data processing equipment, so that the instructions executed through the encoding processor of the computer or other programmable data processing equipment create means for performing the functions described in each block of the block diagram or each step of the flowchart. These computer program instructions can also be stored in a computer-usable or computer-readable memory that can direct a computer or other programmable data processing equipment to function in a particular manner, so that the instructions stored in the computer-usable or computer-readable memory can also produce an article of manufacture containing instruction means for performing the functions described in each block of the block diagram or each step of the flowchart. The computer program instructions can also be loaded onto a computer or other programmable data processing equipment, so that a series of operational steps are performed on the computer or other programmable data processing equipment to create a computer-executed process, so that the instructions that execute the computer or other programmable data processing equipment can also provide steps for executing the functions described in each block of the block diagram and each step of the flowchart.

Furthermore, each block or each step may represent a module, segment, or portion of code, which comprises one or more executable instructions for executing the specified logical function(s). It should also be noted that in some alternative implementations, the functions noted in the blocks or steps may occur out of order. For example, two blocks or steps shown in succession may in fact be executed substantially concurrently, or the blocks or steps may sometimes be executed in the reverse order, depending upon the functionality involved.

The above description is merely illustrative of the technical idea of the present invention, and various modifications and variations will be possible for those of ordinary skill in the art to which the present invention pertains without departing from the essential qualities of the present invention. Therefore, the embodiments disclosed in the present invention are intended to illustrate, not to limit, the technical idea of the present invention, and the scope of the technical idea of the present invention is not limited by these embodiments. The protection scope of the present invention should be interpreted by the following claims, and all technical ideas within the scope equivalent thereto should be interpreted as being included in the scope of rights of the present invention.

## Claims

1. A method for diagnosing an open-pool type nuclear fuel cooling system, comprising:
collecting a captured image of the open-pool type nuclear fuel cooling system and operational data of the open-pool type nuclear fuel cooling system;
generating image data from the captured image;
generating simulation data from the operational data; and
diagnosing a state of the open-pool type nuclear fuel cooling system from the image data and the simulation data using a pre-trained diagnostic model.

2. The method of claim 1, wherein the generating the image data includes:
converting a brightness and a color difference of Cherenkov radiation included in the captured image into a histogram of one of RGB, HSV (hue, saturation, value), and YUV; and
converting the converted histogram into a digital signal to generate the image data.

3. The method of claim 1, wherein the generating the simulation data includes:
generating the simulation data on an intensity and a distribution of Cherenkov radiation by performing a nuclear reaction simulation of the open-pool type nuclear fuel cooling system based on the operational data.

4. The method of claim 1, wherein the diagnostic model includes a first extraction unit, a second extraction unit, and a determination unit,
wherein the first extraction unit is trained to output a first feature vector for the image data upon receiving the image data,
wherein the second extraction unit is trained to output a second feature vector for the simulation data upon receiving the simulation data, and
wherein the determination unit is trained to output a diagnosis result for the state of the open-pool type nuclear fuel cooling system upon receiving the first feature vector generated from the first extraction unit, the second feature vector generated from the second extraction unit, and a true diagnosis result as label data.

5. The method of claim 4, wherein the determination unit generates a determination loss by comparing the true diagnosis result with an actually outputted diagnosis result,
wherein the first extraction unit is further trained to output the first feature vector from the image data upon receiving the determination loss, and
wherein the second extraction unit is further trained to output the second feature vector from the simulation data upon receiving the determination loss.

6. The method of claim 1, wherein the diagnosing the state of the open-pool type nuclear fuel cooling system includes:
extracting a feature vector of the image data and a feature vector of the simulation data, respectively, using the trained diagnostic model; and
diagnosing the state based on a separation distance between the feature vector of the image data and the feature vector of the simulation data.

7. The method of claim 6, wherein the diagnosing the state of the open-pool type nuclear fuel cooling system includes:
diagnosing the state of the open-pool type nuclear fuel cooling system as a normal state if the separation distance is less than a predetermined threshold value, and diagnosing the state of the open-pool type nuclear fuel cooling system as an abnormal state if the separation distance is equal to or greater than the threshold value.

8. The method of claim 1, wherein the diagnosing the state of the open-pool type nuclear fuel cooling system includes:
diagnosing a type of abnormal state of the open-pool type nuclear fuel cooling system, an area presumed to be in an abnormal state, and a degree of the abnormal state.

9. The method of claim 1, wherein the open-pool type nuclear fuel cooling system is a nuclear reactor.

10. An apparatus for diagnosing an open-pool type nuclear fuel cooling system, comprising:
a memory in which a state diagnosis program is stored; and
a processor that executes the state diagnosis program to collect a captured image of an open-pool type nuclear fuel cooling system and operational data of the open-pool type nuclear fuel cooling system, generate image data from the captured image, generate simulation data from the operational data, and diagnose a state of the open-pool type nuclear fuel cooling system from the image data and the simulation data using a pre-trained diagnostic model.

11. The apparatus of claim 10, wherein the processor converts a brightness and a color difference of Cherenkov radiation included in the captured image into a histogram of one of RGB, HSV (hue, saturation, value), and YUV, and converts the converted histogram into a digital signal to generate the image data.

12. The apparatus of claim 10, wherein the processor performs a nuclear reaction simulation of the open-pool type nuclear fuel cooling system based on the operational data to generate the simulation data on an intensity and a distribution of Cherenkov radiation.

13. The apparatus of claim 10, wherein the diagnostic model includes a first extraction unit, a second extraction unit, and a determination unit,
wherein the first extraction unit is trained to output a first feature vector for the image data upon receiving the image data,
wherein the second extraction unit is trained to output a second feature vector for the simulation data upon receiving the simulation data, and
wherein the determination unit is trained to output a diagnosis result for the state of the open-pool type nuclear fuel cooling system upon receiving the first feature vector generated from the first extraction unit, the second feature vector generated from the second extraction unit, and a true diagnosis result as label data.

14. The apparatus of claim 13, wherein the determination unit generates a determination loss by comparing the true diagnosis result with an actual diagnosis result output,
wherein the first extraction unit is further trained to output the first feature vector from the image data upon receiving the determination loss, and
wherein the second extraction unit is further trained to output the second feature vector from the simulation data upon receiving the determination loss.

15. The apparatus of claim 10, wherein the processor extracts a feature vector of the image data and a feature vector of the simulation data, respectively, using the trained diagnostic model, and diagnoses the state based on a separation distance between the feature vector of the image data and the feature vector of the simulation data.

16. The apparatus of claim 15, wherein the processor diagnoses the state of the open-pool type nuclear fuel cooling system as a normal state if the separation distance is less than a predetermined threshold value, and diagnoses the state of the open-pool type nuclear fuel cooling system as an abnormal state if the separation distance is equal to or greater than the threshold value.

17. A non-transitory computer-readable storage medium having a computer program stored thereon, wherein the computer program includes instructions for performing a method for diagnosing an open-pool type nuclear fuel cooling system, the method comprising:
collecting a captured image of the open-pool type nuclear fuel cooling system and operational data of the open-pool type nuclear fuel cooling system;
generating image data from the captured image;
generating simulation data from the operational data; and
diagnosing a state of the open-pool type nuclear fuel cooling system from the image data and the simulation data using a pre-trained diagnostic model.
